# EUROPEAN PATENT SPECIFICATION

(11) **EP 4 021 123 B1**
(45) Date of publication and mention of the grant of the patent: **07.10.2026**
(21) Application number: 19942930.9
(22) Date of filing: 29.08.2019
(51) Int. Cl.: H04B 3/54

(54) **COMMUNICATION METHOD, COMMUNICATION APPARATUS, AND SYSTEM**
KOMMUNIKATIONSVERFAHREN, KOMMUNIKATIONSVORRICHTUNG UND SYSTEM
PROCÉDÉ DE COMMUNICATION, APPAREIL DE COMMUNICATION ET SYSTÈME

(43) Date of publication of application: 29.06.2022
(73) Proprietor: Huawei Technologies Co., Ltd., Shenzhen, Guangdong 518129 (CN)
(72) Inventor: PAN, Dao, Shenzhen, Guangdong 518129 (CN); LI, Hua, Shenzhen, Guangdong 518129 (CN); ZENG, Yan, Shenzhen, Guangdong 518129 (CN); ZHONG, Wei, Shenzhen, Guangdong 518129 (CN)
(74) Representative: Epping - Hermann - Fischer
(86) International application number: PCT/CN2019/103462
(87) International publication number: WO 2021/035652

(56) References cited:
- WO-A1-2016/149381
- CN-A- 102 394 840
- CN-A- 105 659 634
- CN-A- 106 549 836
- CN-A- 106 912 113
- CN-A- 106 912 113
- US-A1- 2015 311 951
- "Unified high-speed wireline-based home networking transceivers - Data link layer specification; G.9961 (11/18)", no. G.9961 (11/18), 29 November 2018 (2018-11-29), pages 1 - 410, XP044279254, Retrieved from the Internet <URL:http://mirror.itu.int/dms/pay/itu-t/rec/g/T-REC-G.9961-201811-I!!PDF-E.pdf> [retrieved on 20190307]
- "Unified high-speed wire-line based home networking transceivers - System architecture and physical layer specification; G.9960 (07/15)", ITU-T STANDARD, INTERNATIONAL TELECOMMUNICATION UNION, GENEVA ; CH, no. G.9960 (07/15), 3 July 2015 (2015-07-03), pages 1 - 162, XP044163699
- LANTIQ INC: "G.hnem: Proposal for G.hnem network architecture;TD10FJ-029", ITU-T DRAFT ; STUDY PERIOD 2013-2016, INTERNATIONAL TELECOMMUNICATION UNION, GENEVA ; CH, vol. 4/15, 11 June 2010 (2010-06-11), pages 1 - 12, XP044028186
- HUA LI HISILICON TECHNOLOGIES CO ET AL: "G.hn: Proposal of a study on IoT for Smart Home over PLC;C1", vol. 18/15, 14 May 2019 (2019-05-14), pages 1 - 5, XP044264231, Retrieved from the Internet <URL:https://www.itu.int/ifa/t/2017/sg15/docs/rgm/Q18-190520/C/T17-SG15RGM-Q18-190520-C-0001.docx> [retrieved on 20190514]
- SUN, YOUWEI ET AL.: "Data link layer protocol of internet of things based on power line", JOURNAL OF XI'AN UNIVERSITY OF POSTS AND TELECOMMUNICATIONS, vol. 19, no. 4, 31 July 2014 (2014-07-31), pages 36 - 39, XP055785835
- IEEE COMMUNICATIONS SOCIETY: "IEEE Standard for Medium Frequency (less than 12 MHz) Power Line Communications for Smart Grid Applications", IEEE STD 1901.1™-2018, 31 December 2018 (2018-12-31), XP068124995

## Description

### TECHNICAL FIELD

This application relates to the field of communication technologies.

### BACKGROUND

Power line communication (PLC), also referred to as a power line network, transmits data or information through an existing power line by using a digital signal processing method. In comparison with a digital subscriber line (DSL) that uses a telephone line, and a cable modem (CM) that uses a coaxial cable line of a cable TV, in the PLC technology, additional network lines do not need to be laid, power lines cover a much wider area than lines of other carriers.

In addition, because the power line is an easy-to-obtain medium resource, an internet of things (IoT) technology actively uses the power line for communication. In this case, the IoT technology may also be referred to as a PLC IoT technology. The IoT technology is a cornerstone of a smart home. The power line medium seamlessly covers most locations in a home and all household appliances are connected to a power line network due to a need of being supplied with power. Therefore, the power line becomes a natural and excellent medium for applying the IoT technology. The smart home is a home-based lifestyle that uses next-generation information technologies such as the internet of things, cloud computing, the mobile internet, and big data to achieve a healthy, low-carbon, smart, comfortable, secure, and caring family lifestyle. The smart home integrates technologies including the internet, computing processing, network communication, sensing and control, and the like. The smart home is not limited to home entertainment and home control (for example, switch, light, temperature, and humidity control). In the near future, conventional industries such as energy, healthcare, security and protection, and education are also to be closely integrated with home applications. Therefore, how to combine a PLC technology applied to a home network with a PLC IoT technology needs to be urgently resolved.

### SUMMARY

The invention is defined by the appended claims.

Embodiments of this application disclose a communication method, apparatus, and system, to combine a PLC technology with a PLC IoT technology, so as to implement a combination of a home network and the IoT, and improve resource management efficiency.

According to a first aspect, an embodiment of this application discloses a communication method. The method includes: An internet of things IoT primary node receives a first broadcast message, where the first broadcast message is used to indicate or include a first communication resource; the IoT primary node sends a first registration request to a home network primary node by using the first communication resource, where the first registration request is used to request to register with a domain in which the home network primary node is located; the IoT primary node receives a second broadcast message, where the second broadcast message is used to indicate or include a second communication resource; and the IoT primary node allocates the second communication resource to an IoT secondary node and/or the IoT primary node.

It may be understood that, in this embodiment of this application, the second broadcast message may further include another communication resource, for example, a communication resource M. The communication resource M may be used to perform data communication between IoT secondary nodes. In other words, in a specific implementation, the second broadcast message may include more communication resources, which are not enumerated herein.

In this embodiment of this application, the IoT primary node may allocate a resource to the IoT secondary node (there may be one IoT secondary node or at least two IoT secondary nodes). Alternatively, the IoT primary node may allocate a resource to the IoT primary node. Alternatively, the IoT primary node may allocate a resource to both the IoT primary node and the IoT secondary node. This is not limited in this embodiment of this application.

In this embodiment of this application, the IoT primary node interacts with the home network primary node, so that the IoT primary node may not only serve as a "home network secondary node" but also serve as a primary node in an IoT network. In this way, PLC and PLC IoT are converged, so that communication resources are centrally managed, mutual interference between the PLC and the PLC IoT is avoided, and resource management efficiency is improved. With reference to the first aspect, in a possible implementation, after the IoT primary node sends the first registration request to the home network primary node by using the first communication resource, the method further includes: The IoT primary node receives a first acknowledgment instruction sent by the home network primary node, where the first acknowledgment instruction is used to acknowledge the first registration request.

It may be understood that, in this embodiment of this application, the first acknowledgment instruction may further include a node identifier A. The node identifier A may be a node identifier of the IoT primary node. That is, the node identifier A is allocated to the IoT primary node, so that the IoT primary node with the node identifier A is enabled to access the home network primary node.

In this embodiment of this application, the IoT primary node may clearly learn, by receiving the first acknowledgment instruction, that the IoT primary node can access the domain in which the home network primary node is located. With reference to the first aspect or any one of the foregoing possible implementations of the first aspect, a domain identifier ID of the IoT primary node is the same as a domain ID of the home network primary node.

In this embodiment of this application, that the domain identifier ID of the IoT primary node is the same as the domain ID of the home network primary node specifically means: When the IoT primary node serves as the "home network secondary node" to apply for information such as a resource from the home network primary node, the domain identifier of the IoT primary node is the same as the domain identifier of the home network primary node. However, in actual application, the IoT primary node has its own IoT network, that is, there is also a domain identifier between the IoT primary node and each IoT secondary node. Whether the domain identifier is the same as the domain ID of the home network primary node is not limited in this embodiment of this application.

With reference to the first aspect or any one of the foregoing possible implementations of the first aspect, the IoT primary node is a node within a resource management range of the home network primary node.

In this embodiment of this application, the IoT primary node registers with the domain in which the home network primary node is located, manages another IoT node, and manages and allocates communication of the IoT node based on a communication resource allocated by the home network primary node. This implements coordination of communication between home network nodes and communication between IoT nodes, and avoids mutual interference of communication between a plurality of nodes.

With reference to the first aspect or any one of the foregoing possible implementations of the first aspect, the first communication resource includes a first time domain resource or a first time-frequency resource; and the second communication resource includes a second time domain resource or a second time-frequency resource.

It may be understood that the time domain resource described in this embodiment of this application refers to a specific time period, including a start time and an end time or a start time plus duration. The time-frequency resource may be a two-dimensional resource of a time dimension and a frequency domain dimension in an orthogonal frequency division multiple access (orthogonal frequency division multiple access, OFDMA) mode.

With reference to the first aspect or any one of the foregoing possible implementations of the first aspect, before the IoT primary node allocates the second communication resource to the IoT secondary node and/or the IoT primary node, the method further includes: The IoT primary node receives a second registration request sent by the IoT secondary node, where the second registration request is used to request to register with a domain in which the IoT primary node is located; and the IoT primary node sends a second acknowledgment instruction to the IoT secondary node, where the second acknowledgment instruction is used to acknowledge the second registration request.

It may be understood that the second acknowledgment instruction may further include a node identifier B, and the node identifier B may be a node identifier of the IoT secondary node. It may be understood that, in this embodiment of this application, the IoT primary node has its own IoT network, that is, there is also a domain identifier between the IoT primary node and each IoT secondary node. Therefore, the domain in which the IoT primary node is located may alternatively be a subdomain of the foregoing home network domain. The IoT primary node allocates a node identifier and a communication resource to another joining secondary node within a range of the subdomain.

In this embodiment of this application, after the IoT primary node registers with a home network in which the home network primary node is located, the IoT primary node may communicate with the home network primary node and obtain a communication resource. The IoT secondary node may register with the IoT network in which the IoT primary node is located, and communicate within the foregoing communication resource range under management of the IoT primary node. This implements level-2 resource management and improves system performance.

With reference to the first aspect or any one of the foregoing possible implementations of the first aspect, the first broadcast message is further used to indicate or include the domain identifier of the home network primary node.

With reference to the first aspect or any one of the foregoing possible implementations of the first aspect, after the IoT primary node receives the first acknowledgment instruction sent by the home network primary node, the method further includes: The IoT primary node performs data communication with the home network primary node.

According to a second aspect, an embodiment of this application further provides a communication method. The method is applied to a converged primary node, the converged primary node includes a converged proxy unit, a home network data link layer, and an internet of things IoT data link layer. The method includes: The converged proxy unit receives first information from the home network data link layer, where the first information is used to indicate or include a third communication resource; the converged proxy unit sends the first information to the IoT data link layer; and an IoT primary node allocates the third communication resource to an IoT secondary node through the IoT data link layer.

In this embodiment of this application, the converged primary node may not only serve as the home network primary node but also serve as the IoT primary node. Therefore, the converged primary node can centrally allocate resources. This avoids mutual interference between resources, and improves system performance.

With reference to the second aspect, in a possible implementation, before the IoT primary node allocates the third communication resource to the IoT secondary node through the IoT data link layer, the method further includes: receiving a third registration request from the IoT secondary node through the IoT data link layer, where the third registration request is used to request to register with a domain in which the IoT data link layer is located; and sending a third acknowledgment instruction to the IoT secondary node through the IoT data link layer, where the third acknowledgment instruction is used to acknowledge the third registration request.

With reference to the second aspect or any one of the foregoing possible implementations of the second aspect, before the converged proxy unit receives the first information from the home network data link layer, the method further includes: The converged proxy unit sends a fourth registration request to the home network data link layer, where the fourth registration request is used to request to register with a domain in which the home network data link layer is located; and the converged proxy unit receives a fourth acknowledgment instruction sent by the home network data link layer, where the fourth acknowledgment instruction is used to acknowledge the fourth registration request.

With reference to the second aspect or any one of the foregoing possible implementations of the second aspect, the third communication resource includes a third time domain resource or a third time-frequency resource.

With reference to the second aspect or any one of the foregoing possible implementations of the second aspect, the method further includes: receiving a fifth registration request from a home network secondary node through the home network data link layer; sending a fifth acknowledgment instruction to the home network secondary node through the home network data link layer, where the fifth acknowledgment instruction is used to acknowledge the fifth registration request; and performing data communication with the home network secondary node through the home network data link layer.

It may be understood that, performing data communication by the home network data link layer with the home network secondary node may be specifically understood as that the home network data layer may perform operations such as management and communication resource allocation on the home network secondary node. In a process of performing data communication, the home network secondary node may further interact with another network architecture layer, such as a physical layer, in the converged primary node. Details are not described herein.

According to a third aspect, an embodiment of this application provides an IoT primary node. The IoT primary node includes: a first receiving unit, configured to receive a first broadcast message, where the first broadcast message is used to indicate or include a first communication resource; a first sending unit, configured to send a first registration request to a home network primary node by using the first communication resource, where the first registration request is used to request to register with a domain in which the home network primary node is located, where the first receiving unit is further configured to receive a second broadcast message, where the second broadcast message is used to indicate or include a second communication resource; and a first data communication unit, configured to allocate the second communication resource to the IoT secondary node and/or the IoT primary node.

With reference to the third aspect, in a possible implementation, the first receiving unit is further configured to receive a first acknowledgment instruction sent by the home network primary node, where the first acknowledgment instruction is used to acknowledge the first registration request.

With reference to the third aspect or any one of the possible implementations of the third aspect, a domain identifier ID of the IoT primary node is the same as a domain ID of the home network primary node.

With reference to the third aspect or any one of the possible implementations of the third aspect, the IoT primary node is a node within a resource management range of the home network primary node.

With reference to the third aspect or any one of the possible implementations of the third aspect, the first communication resource includes a first time domain resource or a first time-frequency resource; and the second communication resource includes a second time domain resource or a second time-frequency resource.

With reference to the third aspect or any one of the possible implementations of the third aspect, the IoT primary node further includes: a second receiving unit, configured to receive a second registration request sent by the IoT secondary node, where the second registration request is used to request to register with a domain in which the IoT primary node is located; and a second sending unit, configured to send a second acknowledgment instruction to the IoT secondary node, where the second acknowledgment instruction is used to acknowledge the second registration request.

With reference to the third aspect or any one of the possible implementations of the third aspect, the first broadcast message is further used to indicate or include the domain ID of the home network primary node.

With reference to the third aspect or any one of the possible implementations of the third aspect, the IoT primary node further includes: a second data communication unit, configured to perform data communication with the home network secondary node.

According to a fourth aspect, an embodiment of this application further provides a converged primary node. The converged primary node includes: a home network data link layer, configured to send first information to a converged proxy unit; the converged proxy unit, configured to receive the first information from the home network data link layer, where the first information is used to indicate or include a third communication resource, and further configured to send the first information to an IoT data link layer; and the IoT data link layer, configured to receive the first information, and allocate the third communication resource to an IoT secondary node.

With reference to the fourth aspect, in a possible implementation, the IoT data link layer is further configured to receive a third registration request from the IoT secondary node, where the third registration request is used to request to register with a domain in which the IoT data link layer is located; and send a third acknowledgment instruction to the IoT secondary node, where the third acknowledgment instruction is used to acknowledge the third registration request.

With reference to the fourth aspect or any one of the possible implementations of the fourth aspect, the converged proxy unit is further configured to send a fourth registration request to the home network data link layer, where the fourth registration request is used to request to register with a domain in which the home network data link layer is located; and receive a fourth acknowledgment instruction sent by the home network data link layer, where the fourth acknowledgment instruction is used to acknowledge the fourth registration request.

With reference to the fourth aspect or any one of the possible implementations of the fourth aspect, the third communication resource includes a third time domain resource or a third time-frequency resource.

With reference to the fourth aspect or any one of the possible implementations of the fourth aspect, the home network data link layer is further configured to receive a fifth registration request from a home network secondary node; send a fifth acknowledgment instruction to the home network secondary node, where the fifth acknowledgment instruction is used to acknowledge the fifth registration request; and perform data communication with the home network secondary node.

According to a fifth aspect, an embodiment of this application provides an IoT primary node, including a processor, a memory, and a transceiver. The processor is coupled to the memory. The processor is configured to receive a first broadcast message by using the transceiver, where the first broadcast message is used to indicate or include a first communication resource. The processor is further configured to control the transceiver to send a first registration request to a home network primary node by using the first communication resource, where the first registration request is used to request to register with a domain in which the home network primary node is located. The processor is further configured to receive a second broadcast message by using the transceiver, where the second broadcast message is used to indicate or include a second communication resource. The processor is further configured to control the transceiver to allocate the second communication resource to an IoT secondary node and/or the IoT primary node. With reference to the fifth aspect, in a possible implementation, the processor is further configured to receive, by using the transceiver, a first acknowledgment instruction sent by the home network primary node, where the first acknowledgment instruction is used to acknowledge the first registration request.

With reference to the fifth aspect or any one of the possible implementations of the fifth aspect, a domain identifier ID of the IoT primary node is the same as a domain ID of the home network primary node.

With reference to the fifth aspect or any one of the possible implementations of the fifth aspect, the IoT primary node is a node within a resource management range of the home network primary node.

With reference to the fifth aspect or any one of the possible implementations of the fifth aspect, the first communication resource includes a first time domain resource or a first time-frequency resource; and the second communication resource includes a second time domain resource or a second time-frequency resource.

With reference to the fifth aspect or any one of the possible implementations of the fifth aspect, the processor is further configured to receive, by using the transceiver, a second registration request sent by the IoT secondary node, where the second registration request is used to request to register with a domain in which the IoT primary node is located. The processor is further configured to send a second acknowledgment instruction to the IoT secondary node by using the transceiver, where the second acknowledgment instruction is used to acknowledge the second registration request. With reference to the fifth aspect or any one of the possible implementations of the fifth aspect, the first broadcast message is further used to indicate or include the domain ID of the home network primary node.

With reference to the fifth aspect or any one of the possible implementations of the fifth aspect, the processor is further configured to perform data communication with the home network primary node by using the transceiver.

According to a sixth aspect, an embodiment of this application provides a converged primary node, including a processor, a memory, and a transceiver. The processor and the memory are coupled. The processor is configured to determine first information, where the first information is used to indicate or include a third communication resource. The processor is further configured to allocate the third communication resource to an IoT secondary node.

With reference to the sixth aspect, in a possible implementation, the processor is further configured to receive, by using the transceiver, a third registration request from the IoT secondary node, where the third registration request is used to request to register with a domain in which an IoT data link layer is located. The processor is further configured to send a third acknowledgment instruction to the IoT secondary node by using the transceiver, where the third acknowledgment instruction is used to acknowledge the third registration request.

With reference to the sixth aspect or any one of the possible implementations of the sixth aspect, the processor is further configured to determine to register with a domain in which a home network data link layer is located.

With reference to the sixth aspect or any one of the possible implementations of the sixth aspect, the third communication resource includes a third time domain resource or a third time-frequency resource.

With reference to the sixth aspect or any one of the possible implementations of the sixth aspect, the processor is further configured to receive a fifth registration request from a home network secondary node by using the transceiver. The processor is further configured to send a fifth acknowledgment instruction to the home network secondary node, where the fifth acknowledgment instruction is used to acknowledge the fifth registration request; and perform data communication with the home network secondary node by using the transceiver.

According to a seventh aspect, an embodiment of this application provides a chip. The chip includes a processor and a memory. The processor is coupled to the memory. The memory is configured to store instructions. The processor is configured to perform the following actions according to the instructions: obtaining a first broadcast message, where the first broadcast message is used to indicate or include a first communication resource; sending a first registration request to a home network primary node by using the first communication resource, where the first registration request is used to request to register with a domain in which the home network primary node is located; obtaining a second broadcast message, where the second broadcast message is used to indicate or include a second communication resource; and allocating the second communication resource to an IoT secondary node and/or an IoT primary node.

It may be understood that, in this embodiment of this application, for example, obtaining the first broadcast message by the chip may be: The processor obtains the first broadcast message from the memory.

With reference to the seventh aspect, in a possible implementation, the processor is further configured to obtain a first acknowledgment instruction sent by the home network primary node, where the first acknowledgment instruction is used to acknowledge the first registration request.

With reference to the seventh aspect or any one of the possible implementations of the seventh aspect, a domain identifier ID of the IoT primary node is the same as a domain ID of the home network primary node.

With reference to the seventh aspect or any one of the possible implementations of the seventh aspect, the IoT primary node is a node within a resource management range of the home network primary node.

With reference to the seventh aspect or any one of the possible implementations of the seventh aspect, the first communication resource includes a first time domain resource or a first time-frequency resource; and the second communication resource includes a second time domain resource or a second time-frequency resource.

With reference to the seventh aspect or any one of the possible implementations of the seventh aspect, the processor is further configured to obtain a second registration request sent by the IoT secondary node, where the second registration request is used to request to register with a domain in which the IoT primary node is located. The processor is further configured to send a second acknowledgment instruction to the IoT secondary node, where the second acknowledgment instruction is used to acknowledge the second registration request.

With reference to the seventh aspect or any one of the possible implementations of the seventh aspect, the first broadcast message is further used to indicate or include the domain ID of the home network primary node.

With reference to the seventh aspect or any one of the possible implementations of the seventh aspect, the processor is further configured to perform data communication with the home network primary node.

According to an eighth aspect, an embodiment of this application further provides a chip. The chip includes a processor and a memory. The processor is coupled to the memory. The memory is configured to store instructions. The processor is configured to perform the following actions according to the instructions: determining first information, where the first information is used to indicate or include a third communication resource; and allocating the third communication resource to an IoT secondary node and/or an IoT primary node.

With reference to the eighth aspect, in a possible implementation, the processor is further configured to obtain a third registration request from the IoT secondary node, where the third registration request is used to request to register with a domain in which an IoT data link layer is located. The processor is further configured to send a third acknowledgment instruction to the IoT secondary node, where the third acknowledgment instruction is used to acknowledge the third registration request.

With reference to the eighth aspect or any one of the possible implementations of the eighth aspect, the processor is further configured to determine to register with a domain in which a home network data link layer is located.

With reference to the eighth aspect or any one of the possible implementations of the eighth aspect, the third communication resource includes a third time domain resource or a third time-frequency resource.

With reference to the eighth aspect or any one of the possible implementations of the eighth aspect, the processor is further configured to obtain a fifth registration request from a home network secondary node. The processor is further configured to send a fifth acknowledgment instruction to the home network secondary node, where the fifth acknowledgment instruction is used to acknowledge the fifth registration request; and perform data communication with the home network secondary node.

According to a ninth aspect, an embodiment of this application provides a communication system. The communication system includes an internet of things IoT primary node, a home network primary node, and an IoT secondary node. The IoT primary node is configured to receive a first broadcast message, where the first broadcast message is used to indicate or include a first communication resource. The IoT primary node is further configured to send a first registration request to the home network primary node by using the first communication resource, where the first registration request is used to request to register with a domain in which the home network primary node is located. The home network primary node is configured to receive the first registration request from the internet of things IoT primary node, and send a first acknowledgment instruction to the IoT primary node, where the first acknowledgment instruction is used to acknowledge the first registration request; and is further configured to send a second broadcast message, where the second broadcast message is used to indicate or include a second communication resource. The IoT primary node is further configured to receive the first acknowledgment instruction and the second broadcast message, and allocate the second communication resource to the IoT secondary node and/or the IoT primary node. The IoT secondary node is configured to perform data communication with the IoT primary node.

In this embodiment of this application, the IoT primary node and the home network primary node may be chips, or may be devices, or the like. Specific forms of the IoT primary node and the home network primary node are not limited in this embodiment of this application.

According to a tenth aspect, an embodiment of this application provides a computer-readable storage medium. The computer-readable storage medium stores instructions. When the instructions are run on a computer, the computer is enabled to perform the methods in the foregoing aspects.

According to an eleventh aspect, an embodiment of this application provides a computer program product including instructions. When the computer program product runs on a computer, the computer is enabled to perform the methods in the foregoing aspects.

### BRIEF DESCRIPTION OF DRAWINGS

FIG. 1 is a schematic diagram of a network architecture according to an embodiment of this application;
FIG. 2 is a schematic diagram of a network architecture according to an embodiment of this application;
FIG. 3 is a schematic diagram of an architecture of a home network DM according to an embodiment of this application;
FIG. 4 is a schematic diagram of an architecture of an IoT DM according to an embodiment of this application;
FIG. 5a is a schematic diagram of a network architecture according to an embodiment of this application;
FIG. 5b is a schematic diagram of a network architecture according to an embodiment of this application;
FIG. 6 is a schematic diagram of an architecture of a converged DM according to an embodiment of this application;
FIG. 7a is a schematic diagram of a network architecture according to an embodiment of this application;
FIG. 7b is a schematic diagram of a network architecture according to an embodiment of this application;
FIG. 8 is a schematic flowchart of a communication method according to an embodiment of this application;
FIG. 9 is a schematic diagram of a format of an IoT MAP packet according to an embodiment of this application;
FIG. 10 is a schematic diagram of a structure of a data frame according to an embodiment of this application;
FIG. 11 is a schematic diagram of a structure of a data frame according to an embodiment of this application;
FIG. 12 is a schematic flowchart of a communication method according to an embodiment of this application;
FIG. 13 is a schematic diagram of a structure of an IoT primary node according to an embodiment of this application;
FIG. 14 is a schematic diagram of a structure of a converged primary node according to an embodiment of this application; and
FIG. 15 is a schematic diagram of a structure of a communication apparatus according to an embodiment of this application.

### DESCRIPTION OF EMBODIMENTS

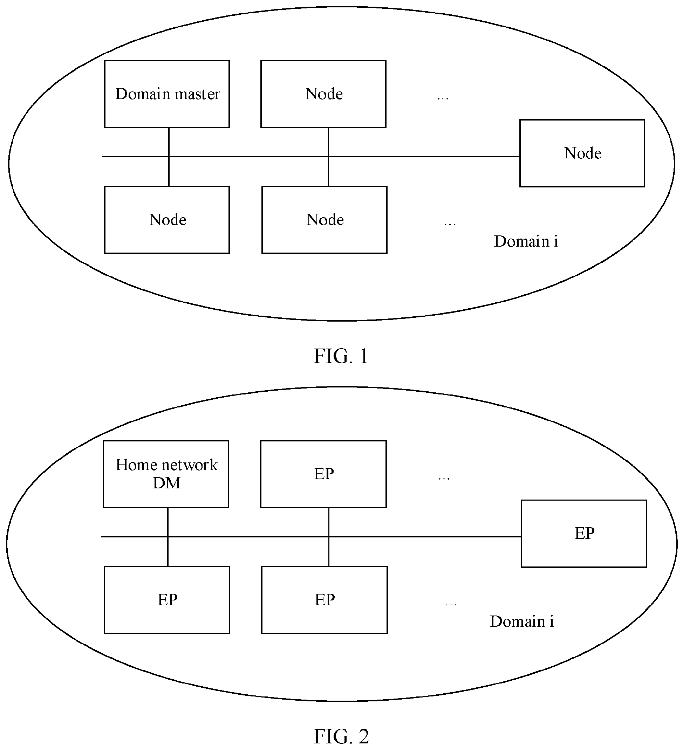

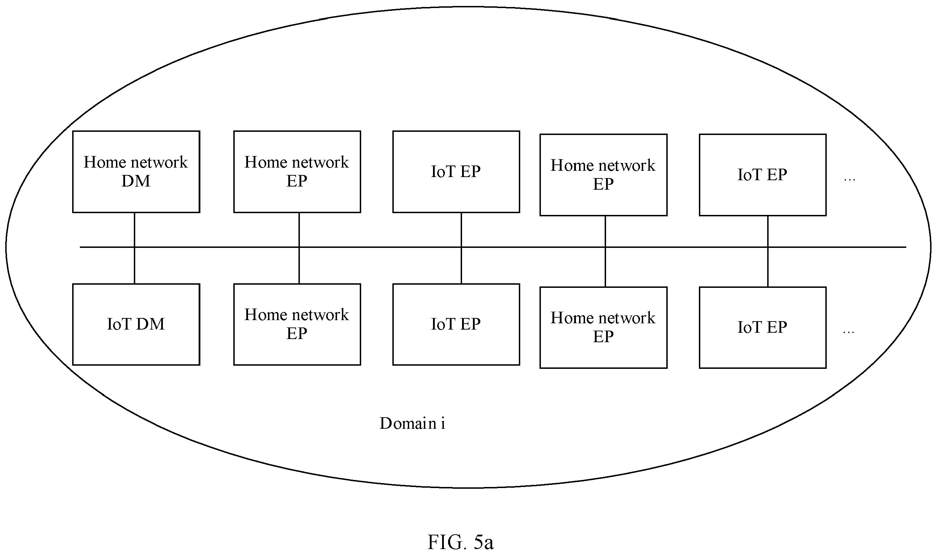

The following describes the embodiments of this application with reference to the accompanying drawings in the embodiments of this application. The present invention is best understood with reference to Figures 5a, 5b, 8-11, 13 and 15. The parts of the description with reference to Figures 1-4, 6, 7a-7b, 12 and 14 are not part of the present invention and are disclosed for illustrative purposes.

The technical background of this application is first described as follows:
In practice, standards used in a broadband technology for power line communication are the International Telecommunication Union-Telecommunication Standardization Sector (international telecommunication union-telecommunication standardization sector, ITU-T) G.hn standard and the HomePlug AV standard. The two standards usually use an orthogonal frequency division multiplexing (orthogonal frequency division multiplexing, OFDM) modulation scheme. The OFDM modulation scheme can ensure stable and complete transmission of data in a communication environment with electromagnetic interference.

As shown in FIG. 1, a home broadband network (which may also be referred to as a home network) usually includes a domain master and a node. Home network nodes may be connected through a power line, and the domain master may perform an operation such as management on an intra-domain node. For ease of understanding, in this embodiment of this application, the G.hn standard is used as an example to describe a method provided in this application. For example, in the G.hn standard, the domain master is usually referred to as a home network primary node or a home network DM, and the node is a home network secondary node or a home network end point (EP). For another example, in the HomePlug AV standard, the domain master may also be referred to as a central coordinator (CC), and the node is referred to as a station (STA). Therefore, the DM and the EP in the embodiments of this application may not be understood as that the method provided in this application is applicable only to the G.hn standard. In other words, the method provided in this application is also applicable to other home network standards. Therefore, according to a network architecture shown in FIG. 1, FIG. 2 shows a home network including a DM and a plurality of EPs. Any two nodes of the DM and the plurality of EPs may be connected through a power line. The DM may be configured to manage an intra-domain node (that is, the EP). For example, the DM may be configured to manage registration and deregistration of the intra-domain node, and manage a node priority of the intra-domain node, or be responsible for allocating a communication resource.

Specifically, the DM or the EP may be a broadband power line communication modem, a router, a wireless fidelity (wireless fidelity, Wi-Fi), a wireless access point (AP), a digital subscriber line (DSL) modem, an optical network terminal (ONT), or the like. The DM or the EP is commonly used in the home network, and a PLC technology is used to connect a home primary router and another AP or router node that has a Wi-Fi function. In this way, high-quality Wi-Fi coverage may be implemented in the home network.

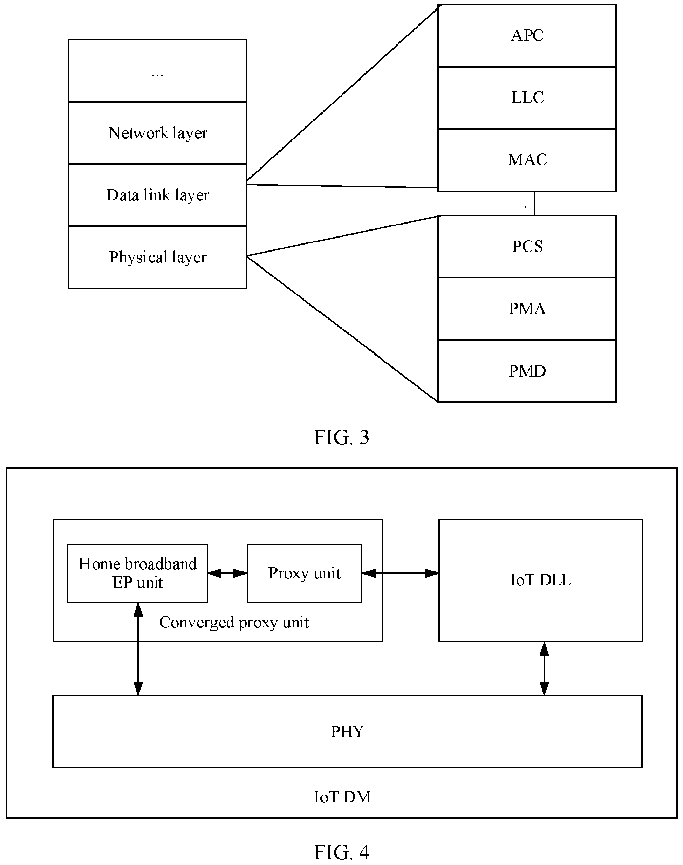

The G.hn standard is a standard protocol suite formulated by the ITU-T for home network application. A plurality of standard documents are included, for example, G.9960, G.9961, G.9963, and G.9964, respectively corresponding to technical standards related to a home network technology such as an architecture, a physical layer, a data link layer, and multiple-input multiple-output (multiple-input multiple-output, MIMO). The G.hn standard is applicable only to home network connection application. A reference model of a home network G.hn standard is shown in FIG. 3. The G.hn standard mainly defines a data link layer (data link layer, DLL) and a physical layer (physical layer, PHY). The data link layer further includes an application protocol convergence (application protocol convergence) layer, a logical link control (logical link Control) layer, and a medium access control (medium access control) layer. The physical layer further includes a physical coding sublayer (physical coding sublayer), a physical medium attachment (physical medium attachment) sublayer, and a physical medium dependent (physical medium dependent) sublayer.

In addition, a power line communication (power line communication, PLC) internet of things (internet of things, IoT) technology also actively uses a power line for communication. Standards such as G3-PLC and Institute of Electrical and Electronics Engineers (institute of electrical and electronics engineers, IEEE) 1901.1 are usually used.

A home network node is mainly used to support home broadband coverage. PLC IoT nodes are pervasive. That is, each appliance supporting a smart home may be an IoT node. In other words, in the home network, there are a small quantity of home network nodes, and there are a large quantity of PLC IoT nodes (including an IoT primary node and an IoT secondary node). Therefore, in a process of simultaneously using a power line, mutual interference may occur. For example, use of a PLC IoT node may cause degradation of broadband performance of the home network node, and use of the home network node may cause a packet loss or a long delay for the PLC IoT node.

Therefore, this application provides a communication method, to reduce mutual interference between the PLC IoT node and the home network node, and improve system performance.

In this embodiment of this application, a home network primary node and a home network secondary node each may be a power line communication modem, a router, a Wi-Fi AP, a DSL modem, an ONT, or the like. Specific forms of the home network primary node and the home network secondary node are not limited in this embodiment of this application. An IoT primary node and an IoT secondary node each may be an IoT service gateway, or a household appliance that integrates an IoT function, or the like. Specific forms of the IoT primary node and the IoT secondary node are not limited in this embodiment of this application.

It may be understood that a method for distinguishing between the home network primary node and the home network secondary node is provided. For example, a node in nodes may be fixedly set to the home network primary node. For example, a node A in the nodes may be set to the home network primary node, and other nodes in the nodes, such as a node B and a node C, may be referred to as home network secondary nodes. For example, in a home network, a home primary route may be set to the home network primary node. For another example, in a specific use, when a node such as a node D is powered on first, the node D may be referred to as the home network primary node, and another node in nodes, such as a node E, may be referred to as the home network secondary node. It may be understood that, for a method for distinguishing between the IoT primary node and the IoT secondary node, refer to the foregoing description.

In this embodiment of this application, the home network primary node, the home network secondary node, the IoT primary node, and the IoT secondary node may be all connected to a power line network through a power supply interface in a home power grid, that is, the nodes may communicate with each other through a power line.

It may be understood that, in this embodiment of this application, the home network primary node may also be referred to as a home network DM, the home network secondary node may also be referred to as a home network EP, the IoT primary node may also be referred to as an IoT DM, and the IoT secondary node may also be referred to as an IoT EP. A reference model for the home network primary node, that is, the home network DM, may be shown in FIG. 3, and a reference model for the IoT primary node, that is, the IoT DM, is shown in FIG. 4 (it may be understood that a structure of a converged proxy unit shown in FIG. 4 is merely an example, and may not be construed as a limitation on this application). FIG. 4 is a schematic diagram of an architecture of an IoT DM according to an embodiment of this application. The IoT DM may include an IoT DLL. The IoT DLL may include a protocol convergence (application protocol convergence) layer, a logical link (logical link control) layer, and a medium access control layer. The IoT DLL may complete registration management of an IoT EP node, allocation of a signal transmission resource on a physical medium, framing and frame multiplexing, and generation of a link control layer packet such as a medium access plan (medium access plan, MAP) packet. The IoT primary node may further include a physical layer (physical layer, PHY). The physical layer may further include a physical coding sublayer (physical coding sublayer), a physical medium attachment (physical medium attachment) layer, and a physical medium dependent (physical medium dependent) layer. The PHY may encode and modulate data, for example, encode and modulate the data into a signal that can be sent to a line, demodulate and decode the signal, for example, demodulate the signal on the line and perform a decoding operation on the data, and convert the signal to bit data, and the like. It may be understood that the PHY shown in FIG. 4 may not only support a standard used for PLC, but also support a standard used for PLC IoT.

In this embodiment of this application, the IoT DM may further include a converged proxy unit. The converged proxy unit may act for the IoT DM as an EP (namely, the home network EP) in the PLC G.hn standard to register with a PLC network, apply for and receive a communication resource allocated by the home network DM, and send the communication resource to a DLL (namely, the IoT DLL) in the IoT DM.

In an embodiment, as shown in FIG. 4, the converged proxy unit may include a home network EP unit and a proxy unit. The home network EP unit may be configured to support most functions of a DLL in the home network EP, that is, configured to support the IoT DM in communicating with the home network DM, so that the IoT DM is registered in a target domain (that is, a domain in which the home network DM is located) as the home network EP. There is an interface between the home network EP unit and the proxy unit, and there is an interface between the home network EP and a physical layer in the IoT DM. The home network EP unit may communicate with the home network DM by using a physical layer modulation and demodulation signal, for example, perform relevant registration and obtain information such as the communication resource, and may further send the obtained information such as the communication resource to the proxy unit. The proxy unit may obtain the information such as the communication resource from the home network EP unit; and may be further connected to the IoT DLL, and send the information such as the communication resource to the IoT DLL.

According to the reference models shown in FIG. 3 and FIG. 4, FIG. 5a is a schematic diagram of a network architecture according to an embodiment of this application. As shown in FIG. 5a, a network in which a domain i is located may include one home network DM and a plurality of home network EPs, and one IoT DM and a plurality of IoT EPs.

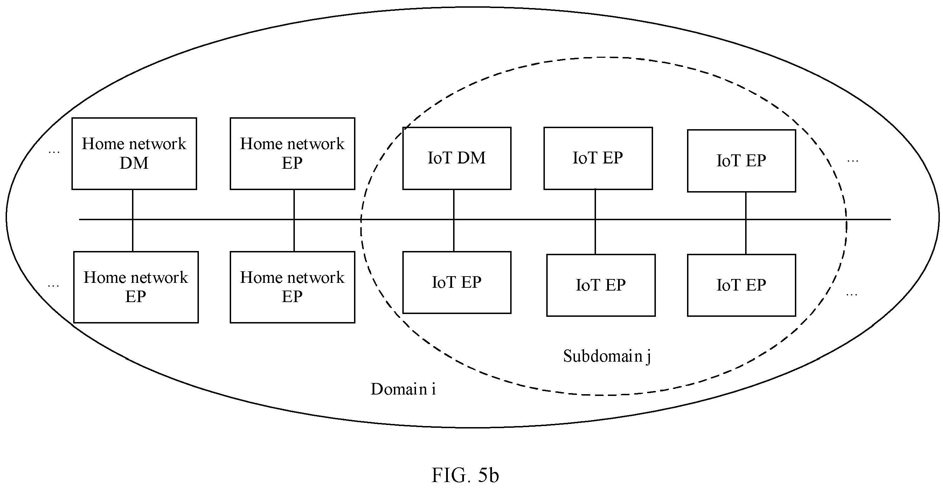

In an embodiment, FIG. 5b is a schematic diagram of a network architecture according to an embodiment of this application. As shown in FIG. 5b, a home network in which a domain i is located may further include a subdomain j, and the subdomain j may include one IoT DM and a plurality of IoT EPs.

In an embodiment, this application further provides a converged primary node. The converged primary node may also be referred to as a converged DM. The converged DM may include a home network DLL and an IoT DLL. For the home network DLL, refer to the description shown in FIG. 3. For the IoT DLL, refer to the specific description of the foregoing embodiment. The converged DM may further include a PHY. For the PHY, refer to the specific description of the foregoing embodiment. Details are not described herein again.

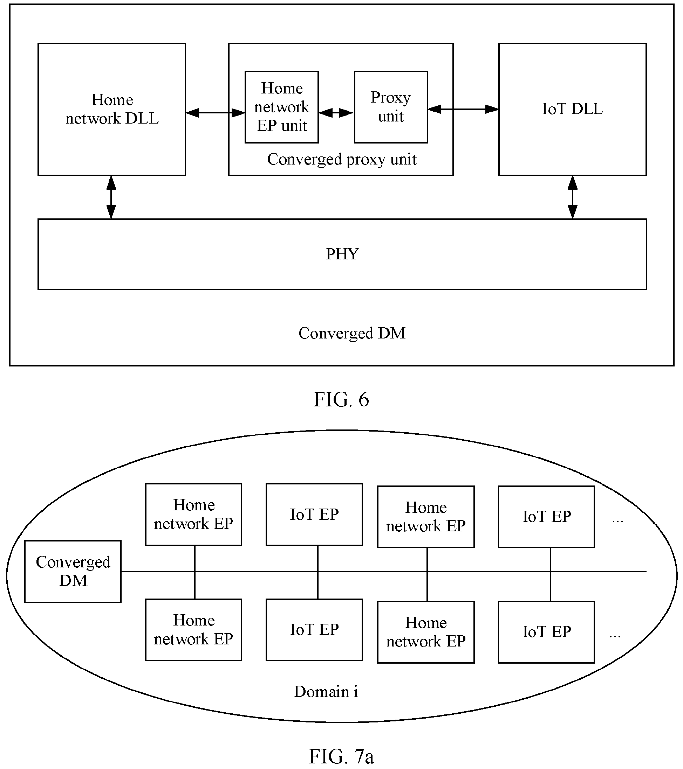

In an embodiment, FIG. 6 is a schematic diagram of an architecture of a converged DM according to an embodiment of this application. As shown in FIG. 6, the converged DM may further include a converged proxy unit, and the converged proxy unit may include a home network EP unit and a proxy unit. The home network EP unit may be configured to support most functions of a DLL in a home network EP, that is, configured to support the converged DM in serving as the home network EP to connect to a home network DLL in FIG. 6, so that the converged DM is registered as the home network EP in a target domain (for example, a domain i in which a home network DM is located). There is an interface between the home network EP unit and the home network DLL, so that relevant registration can be performed and information such as a communication resource can be obtained. There is an interface between the home network EP unit and the proxy unit, so that the proxy unit can obtain the communication resource, and the proxy unit can further send the communication resource to an IoT DLL.

According to the reference models shown in FIG. 3 and FIG. 6, FIG. 7a is a schematic diagram of a network architecture according to an embodiment of this application. As shown in FIG. 7a, a network in which a domain i is located may include one converged DM, a plurality of home network EPs, and a plurality of IoT EPs.

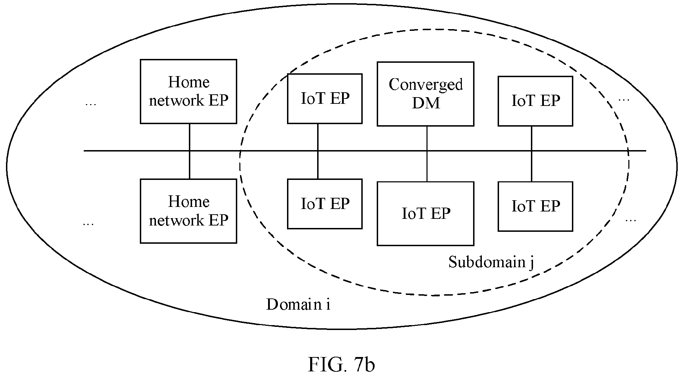

In an embodiment, FIG. 7b is a schematic diagram of a network architecture according to an embodiment of this application. As shown in FIG. 7b, a home network in which a domain i is located may include one converged DM and a plurality of IoT EPs.

For FIG. 5a and FIG. 7a, a domain identifier ID of the IoT primary node is the same as a domain ID of the home network primary node. However, for FIG. 5b and FIG. 7b, a domain in which the IoT primary node is located may alternatively be a subdomain in the foregoing home network domain.

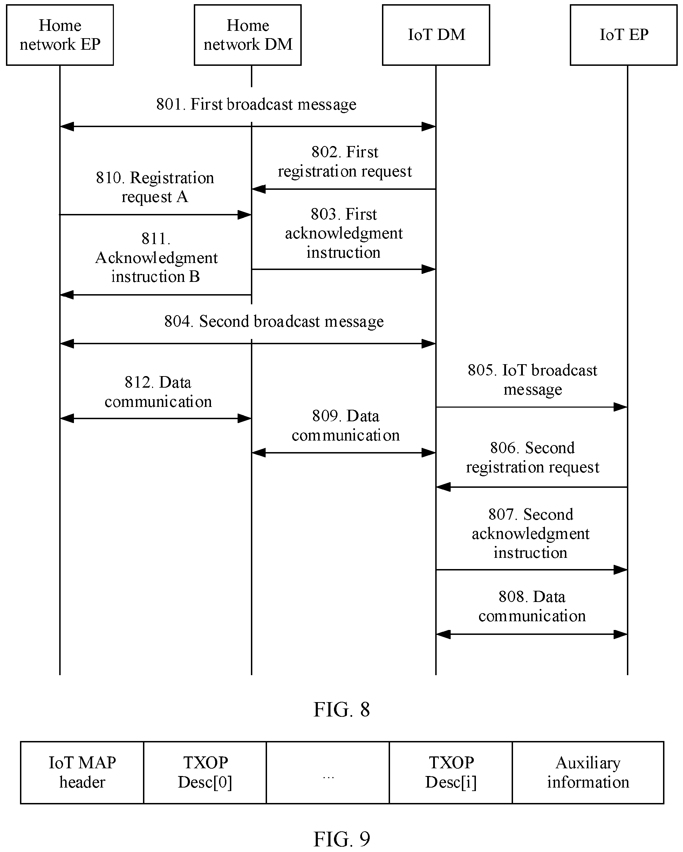

The foregoing describes each node in the embodiments of this application. The following specifically describes a method in the embodiments of this application. It may be understood that the method may be applied to a time division multiple access (TDMA) system, or may be applied to an orthogonal frequency division multiple access (OFDMA) system. FIG. 8 is a schematic flowchart of a communication method according to an embodiment of this application. The communication method includes the following steps.

801. A home network DM sends a first broadcast message. For example, the home network DM may periodically send the first broadcast message to an IoT DM and a home network EP.

The first broadcast message may be used to indicate or include a first communication resource, and the first communication resource is a resource that needs to be occupied by the IoT DM or the home network EP to initiate a registration request. Specifically, the first communication resource may include a first time domain resource or a first time-frequency resource, and the first time domain resource may also be understood as a first timeslot resource. The first broadcast message may directly include the first communication resource, for example, directly include the first timeslot resource as a timeslot 1. Alternatively, the first broadcast message may be used to indicate the first communication resource, for example, indicate the timeslot 1 by using a specific symbol. A specific form of the first communication resource is not limited in this embodiment of this application. It may be understood that, if the first broadcast message is used to indicate the first communication resource, the indication method has been negotiated between a sending party and a receiving party in advance. That is, the sending party and the receiving party can clearly learn a specific method used to indicate the first communication resource.

Optionally, the first broadcast message may be further used to indicate or include a domain ID. The domain ID may be used to indicate the IoT DM to select, based on a domain ID of the IoT DM, whether to access a domain in which the home network DM is located.

Optionally, the first broadcast message may be further broadcast in a form of a MAP packet. For example, the first timeslot resource is allocated to the IoT DM by using the MAP packet. The first timeslot resource may be a contention free transmission opportunity ( CFTXOP) or a contention free timeslot (CFTS).

It may be understood that, in another standard, the first broadcast message may alternatively be in another form, for example, a beacon form. Therefore, a specific form of the first broadcast message is not limited in this embodiment of this application.

802. The IoT DM receives the first broadcast message, and sends a first registration request to the home network DM by using the first communication resource.

The first registration request may be used to request to register with the domain in which the home network DM is located. In other words, the first registration request may be used to request to register the IoT DM as the home network EP with the domain in which the home network DM is located.

803. The home network DM receives the first registration request sent by the IoT DM, and sends a first acknowledgment instruction to the IoT DM.

The first acknowledgment instruction may be used to acknowledge the first registration request.

It may be understood that the first acknowledgment instruction may further include a node identifier A. That is, the node identifier A is a node identifier allocated by the home network DM to the IoT DM. By allocating the node identifier A, the home network DM may allocate a resource to a corresponding node when sending a second broadcast message, for example, may allocate a second communication resource to the IoT DM whose node identifier is A.

804. The home network DM sends the second broadcast message, where the second broadcast message may be used to indicate or include the second communication resource.

The second communication resource may be understood as a resource that needs to be occupied by the IoT DM or the home network EP to send a signal. The second communication resource may be used to indicate or include a second time domain resource or a second time-frequency resource. It may be understood that, for a specific description of the second communication resource, refer to the description of the first communication resource. Details are not described herein again.

It may be understood that, after receiving the second broadcast message, the IoT DM may allocate the second communication resource to an IoT node, for example, may allocate a resource to an IoT secondary node, or may allocate a resource to an IoT primary node. This is not limited in this embodiment of this application.

805. The IoT DM sends an IoT broadcast message to an IoT EP by using the second communication resource.

The IoT broadcast message may be used to indicate or include the second communication resource. Specifically, the IoT broadcast message may further include registration-related information, and the registration-related information may include information such as physical layer-related information and a domain identifier. The registration-related information enables the IoT EP to correctly receive and send a registration-related data frame, and determine, by determining the domain identifier, whether to initiate a registration request, so as to register with a domain in which the IoT DM is located. It may be understood that a specific form of the IoT broadcast message may be in a form of an IoT MAP packet, and the IoT MAP packet may include a second timeslot resource and the registration-related information.

Optionally, a format of the IoT MAP packet may be shown in FIG. 9. An IoT MAP header (header) is a header in the MAP packet, and may be used to carry information such as a physical layer modulation and demodulation key parameter, for example, a bit allocation table (bit allocation table, BAT) and a forward error correction (forward error correction, FEC) parameter (for example, a code block size and a bit rate). TXOP Desc[i]: A transmission opportunity (transmission opportunity, TXOP) is a timeslot resource unit, and i in TXOP Desc[i] indicates an attribute of the TXOP, allocation information of a node, and the like. In other words, i may indicate a specific node to which a timeslot resource is correspondingly allocated. Auxiliary information (auxiliary information) includes key information related to registration, for example, the domain identifier.

It may be understood that the domain identifier described in this embodiment of this application may not only include an identifier of the IoT DM, but also include a multicast identifier (multicast ID) and a broadcast identifier (broadcast ID). The multicast identifier may indicate that a communication resource is allocated to a node in a specific multicast in the domain, and the broadcast identifier may indicate that the communication resource is allocated to all nodes in the domain. The identifier of the IoT DM may indicate whether the IoT EP accesses the domain in which the IoT DM is located.

It may be understood that a resource occupied by the IoT DM to send the IoT broadcast message may be a part of the second communication resource, may be all of the second communication resource, or the like. This is not limited in this embodiment of this application.

806. The IoT EP receives the IoT broadcast message, and sends a second registration request to the IoT DM, to request to register with the domain in which the IoT DM is located.

807. The IoT DM receives the second registration request, and sends a second acknowledgment instruction to the IoT EP, to acknowledge the second registration request.

The second acknowledgment instruction may include the domain identifier. For a specific description of the domain identifier, refer to the foregoing embodiments.

808. The IoT DM performs data communication with the IoT EP.

809. The IoT DM performs data communication with the home network DM.

A sequence of step 805 and step 809 is not limited.

It may be understood that this application further provides a communication method between the home network DM and the home network EP, as shown in the following:
810. The home network EP receives the first broadcast message from the home network DM, and sends a registration request A to the home network DM.

811. The home network DM receives the registration request A, and sends an acknowledgment instruction B to the home network EP, to acknowledge the registration request A.

812. The home network DM performs data communication with the home network EP.

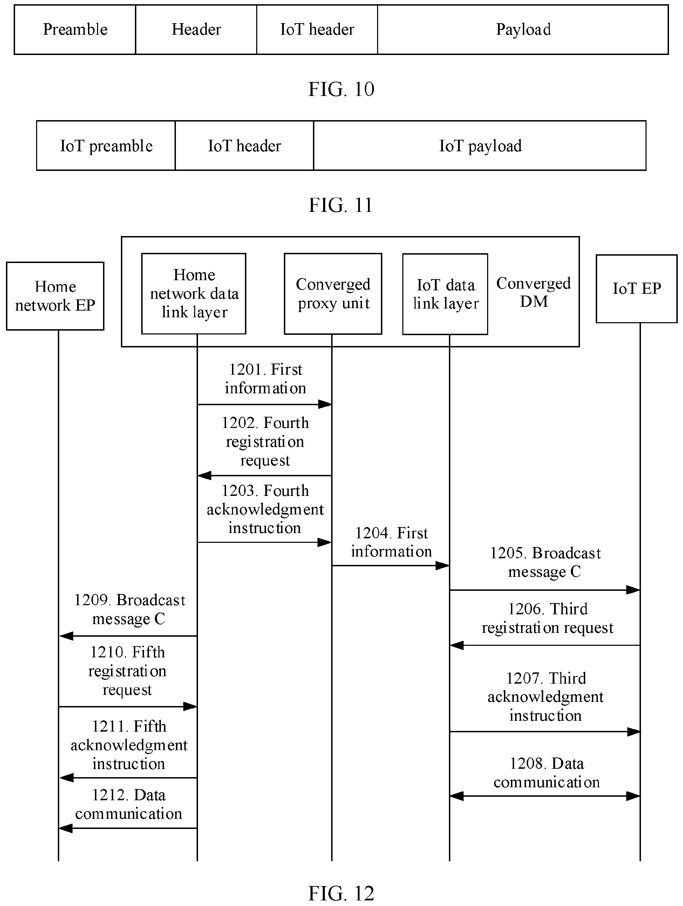

In this embodiment of this application, if the second communication resource such as the second timeslot resource, allocated by the home network DM to the IoT DM, is in a contention relationship with a timeslot resource used by the home network DM, for example, a data frame is sent on a timeslot resource that is obtained through contention in a CBTXOP or a CBTS, a data frame format of the IoT DM or the IoT EP needs to be compatible with a frame format in an original home network. As shown in FIG. 10, an IoT header (header) is added to a frame structure header (header) of the home network.

A preamble (Preamble) is defined at an IoT PHY layer, and basically remains a definition in the G.hn PHY (G.9960). Therefore, the home network DM, the home network EP, and the IoT DM can detect a data frame by using the preamble. For example, a definition in an original G.hn 28 MHz mode may be remained.

A definition of the header in the G.hn standard is remained, so that the home network DM can identify a frame. The IoT header includes at least a source (source, S) ID and a destination (destination, D) ID of an IoT network, so that the IoT EP can identify a source and a destination of the frame.

The IoT DM obtains an ID of the IoT DM after registering with the home network as the home network EP by using a converged proxy unit. Subsequently, in a data frame to be sent to the IoT EP, the IoT DM may set both a SID and a DID in a header (non-IoT Header) to the foregoing ID, so that home network nodes including the home network DM and the home network EP receive the data frame, but do not process the data frame. After the IoT EP registers with the IoT network, the IoT EP also records the ID obtained by the IoT DM, and in a data frame to be sent to another IoT EP, sets a SID and a DID in a header to the foregoing ID. This ensures that the data frame is not processed by a node in the home network.

An original definition of an IoT payload in the G.hn PHY standard is remained, or a new parameter such as an OFDM symbol length is used to carry a data symbol for formally transmitting data between IoT nodes.

In this embodiment of this application, if the timeslot resource allocated by the home network DM to the IoT DM is in a non-contention relationship with the timeslot resource used by the home network DM, that is, IoT nodes (including the IoT DM and the IoT EP) do not need to contend with the home network node to send a data frame, a structure of the data frame may be shown in FIG. 11.

An IoT preamble is an independent preamble and a parameter that are defined at the IoT PHY layer.

The IoT header is a header symbol and a header parameter that are defined at the IoT PHY layer, and includes other information such as IoT SID/DID information and a transmitted modulation and coding parameter.

The IoT payload is a payload symbol and a payload parameter that are defined at the IoT PHY layer.

In this embodiment of this application, the IoT DM interacts with the home network DM and the IoT EP, so that the IoT DM may not only register with the home network as the "home network EP", but also serve as a role of a DM to perform an operation such as resource allocation on the IoT EP. In this way, PLC and PLC IoT are converged, so that communication resources are centrally managed, mutual interference between the PLC and the PLC IoT is avoided, and resource management efficiency is improved.

FIG. 12 is a schematic flowchart of another communication method according to an embodiment of this application. The communication method may be applied to a converged DM. For a network architecture of the converged DM, refer to the foregoing embodiment.

The communication method includes the following steps.

1201. A home data link layer sends first information to a converged proxy unit, where the first information may be used to indicate or include a third communication resource.

The third communication resource may include a third time domain resource or a third time-frequency resource, and the third communication resource may be a resource required for communication between the converged DM and an IoT EP.

Optionally, when detecting that the converged proxy unit is started, the home data link layer may send the first information to the converged proxy unit. For example, when the converged DM receives an instruction for enabling an IoT function that is entered by a user, the converged DM may start the converged proxy unit. Alternatively, when an application requirement is detected, the converged proxy unit may be started.

1202. The converged proxy unit receives the first information sent by the home data link layer, and sends a fourth registration request to the home network data link layer, where the fourth registration request may be used to request to register with a domain in which the home network data link layer is located.

1203. The home network data link layer receives the fourth registration request, and sends a fourth acknowledgment instruction to the converged proxy unit, where the fourth acknowledgment instruction is used to acknowledge the fourth registration request.

1204. The converged proxy unit receives the fourth registration request, and sends the first information to an IoT data link layer.

It may be understood that, after the IoT data link layer receives the first information including the third communication resource, the converged DM may allocate the third communication resource to an IoT secondary node through the IoT data link layer. This enables the IoT secondary node to use the allocated resource to perform data communication with other nodes (including an IoT secondary node and an IoT primary node).

1205. The IoT data link layer receives the first information, and the converged DM may further send a broadcast message C to the IoT EP through the IoT data link layer.

The broadcast message C is used to indicate or include the third communication resource, and the third communication resource may be used for the IoT EP to perform data communication with the IoT data link layer.

1206. The IoT EP receives the broadcast message C, and sends a third registration request to the IoT data link layer, where the third registration request is used to request to register with a domain in which the IoT data link layer is located.

1207. The IoT data link layer receives the third registration request, and sends a third acknowledgment instruction to the IoT EP to acknowledge the third registration request.

1208. The IoT EP performs data communication with the IoT data link layer.

1209. A home network EP receives the broadcast message C.

1210. The home network EP sends a fifth registration request to the home network data link layer, where the fifth registration request is used to request to register with the domain in which the home network data link layer is located. 1211. The home network data link layer receives the fifth registration request, and sends a fifth acknowledgment instruction to the home network EP to acknowledge the fifth registration request.

1212. The home network data link layer performs data communication with the home network EP.

In this embodiment of this application, both the home network data link layer and the IoT data link layer are disposed in the converged DM, so that the converged DM may not only serve as a home network DM, but also serve as an IoT DM. In this way, resources are centrally managed, and mutual interference between resources and a waste of resources are avoided.

The method in the embodiments of this application is described in detail above. The following provides an apparatus in the embodiments of this application.

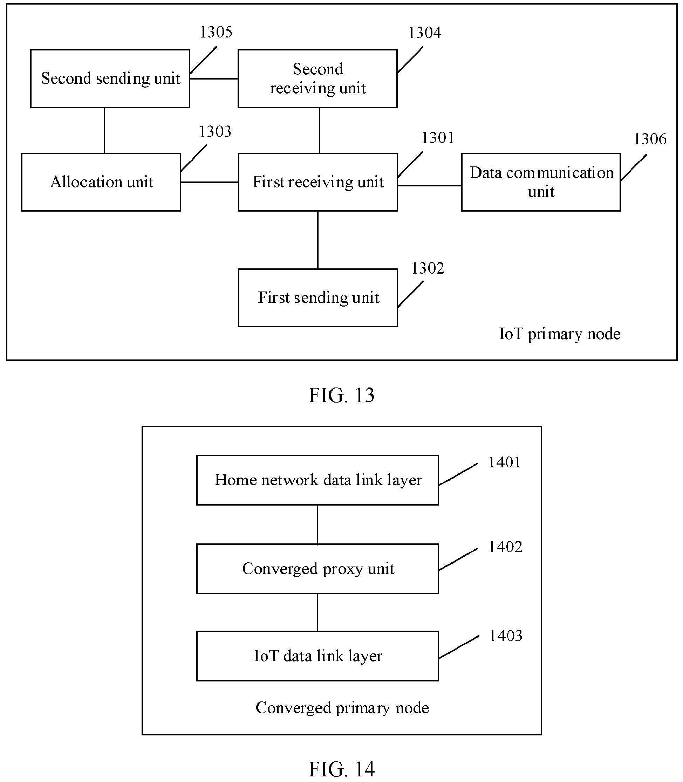

FIG. 13 is a schematic diagram of a structure of an IoT primary node according to an embodiment of this application. The IoT primary node may be configured to perform the communication method provided in the embodiments of this application. As shown in FIG. 13, the IoT primary node includes:
a first receiving unit 1301, configured to receive a first broadcast message, where the first broadcast message is used to indicate or include a first communication resource;
a first sending unit 1302, configured to send a first registration request to a home network primary node by using the first communication resource, where the first registration request is used to request to register with a domain in which the home network primary node is located, where
the first receiving unit 1301 is further configured to receive a second broadcast message, where the second broadcast message is used to indicate or include a second communication resource; and
an allocation unit 1303, configured to allocate the second communication resource to an IoT secondary node and/or the IoT primary node.

In a possible implementation, the first receiving unit 1301 is further configured to receive a first acknowledgment instruction sent by the home network primary node, where the first acknowledgment instruction is used to acknowledge the first registration request.

In a possible implementation, a domain identifier ID of the IoT primary node is the same as a domain ID of the home network primary node.

In a possible implementation, the IoT primary node is a node within a resource management range of the home network primary node.

In a possible implementation, the first communication resource includes a first time domain resource or a first time-frequency resource; and the second communication resource includes a second time domain resource or a second time-frequency resource.

In a possible implementation, the IoT primary node further includes: a second receiving unit 1304, configured to receive a second registration request sent by the IoT secondary node, where the second registration request is used to request to register with a domain in which the IoT primary node is located; and a second sending unit 1305, configured to send a second acknowledgment instruction to the IoT secondary node, where the second acknowledgment instruction is used to acknowledge the second registration request.

In a possible implementation, the first broadcast message is further used to indicate or include the domain ID of the home network primary node.

In a possible implementation, the IoT primary node further includes: a data communication unit 1306, configured to perform data communication with the home network secondary node.

It may be understood that, for a specific implementation of the IoT primary node, refer to the description of the foregoing embodiment. Details are not described herein again.

FIG. 14 is a schematic diagram of a structure of a converged primary node according to an embodiment of this application. The converged primary node may be configured to perform the communication method provided in the embodiments of this application. As shown in FIG. 14, the converged primary node includes:
a home network data link layer 1401, configured to send first information to a converged proxy unit 1402;
the converged proxy unit 1402, configured to receive the first information from the home network data link layer 1401, where the first information is used to indicate or include a third communication resource; and further configured to send the first information to an IoT data link layer 1403; and
the IoT data link layer 1403, configured to receive the first information, and allocate the third communication resource to an IoT secondary node through the IoT data link layer.

In a possible implementation, the IoT data link layer 1403 is further configured to receive a third registration request from the IoT secondary node, where the third registration request is used to request to register with a domain in which the IoT data link layer 1403 is located; and send a third acknowledgment instruction to the IoT secondary node, where the third acknowledgment instruction is used to acknowledge the third registration request.

In a possible implementation, the converged proxy unit 1402 is further configured to send a fourth registration request to the home network data link layer 1401, where the fourth registration request is used to request to register with a domain in which the home network data link layer is located; and receive a fourth acknowledgment instruction sent by the home network data link layer 1401, where the fourth acknowledgment instruction is used to acknowledge the fourth registration request.

In a possible implementation, the third communication resource includes a third time domain resource or a third time-frequency resource.

In a possible implementation, the home network data link layer 1401 is further configured to receive a fifth registration request from a home network secondary node; send a fifth acknowledgment instruction to the home network secondary node, where the fifth acknowledgment instruction is used to acknowledge the fifth registration request; and perform data communication with the home network secondary node.

It may be understood that, for a specific implementation of the converged primary node, refer to the description of the foregoing embodiment. Details are not described herein again.

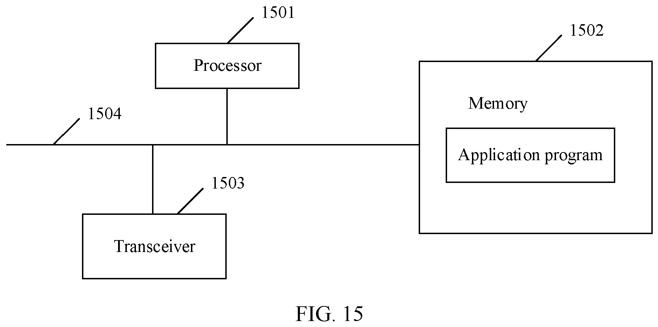

FIG. 15 is a schematic diagram of a structure of a communication apparatus according to an embodiment of this application. As shown in FIG. 15, the communication apparatus may include a processor 1501, a memory 1502, and a transceiver 1503. The processor 1501, the memory 1502, and the transceiver 1503 are coupled through a connector. The connector may include various types of interfaces, transmission lines, buses 1504, or the like. This is not limited in this embodiment. It should be understood that, in the embodiments of this application, coupling refers to a mutual connection in a specific manner, including a direct connection or an indirect connection through another device, for example, a connection through various interfaces, transmission lines, buses, or the like.

The memory 1502 may be configured to store computer program instructions, including an operating system (OS) and various types of computer program code including program code used to execute the solutions of this application. Optionally, the memory 1502 includes but is not limited to a nonvolatile memory, for example, an embedded multimedia card (eMMC), a universal flash storage (UFS) or a read-only memory (read-only memory, ROM), or another type of static storage device that can store static information and instructions. The memory 1502 may alternatively be a volatile memory, for example, a random access memory (RAM), or another type of dynamic storage device that can store information and instructions. The memory 1502 may alternatively be an electrically erasable programmable read-only memory (EEPROM), a compact disc read-only memory (CD-ROM), or another optical disk storage, an optical disc storage (including a compact disc, a laser disc, an optical disc, a digital versatile disc, a Blu-ray disc, and the like), a magnetic disk storage medium or another magnetic storage device, or any other computer-readable storage medium that can be used to carry or store program code in a form of instructions or a data structure and can be accessed by a computer, or the like. The memory 1502 is configured to store related instructions and data. The transceiver 1503 is configured to receive and send data. For example, the transceiver may be configured to receive a broadcast message, a registration request, and the like. This is not limited in this embodiment of this application.

The processor 1501 may be one or more central processing units (central processing units, CPUs). When the processor 1501 is one CPU, the CPU may be a single-core CPU, or may be a multi-core CPU. Optionally, the processor 1501 may be a processor group including a plurality of processors, and the plurality of processors are coupled to each other through one or more buses.

It may be understood that the foregoing is merely the schematic diagram of the structure of the communication apparatus according to the embodiment of this application. In a specific implementation, the communication apparatus may have more or fewer components than those shown in the figure, and two or more components may be combined, or there may be a different configuration implementation of different components, and the like.

It may be understood that the communication apparatus shown in FIG. 15 may be an IoT primary node, may be a converged primary node, or the like. For example, a structure of the IoT primary node may be the structure shown in FIG. 15, and a structure of the converged primary node may also be the structure shown in FIG. 15.

It may be understood that FIG. 15 shows only the schematic diagram of the structure of the communication apparatus. For a structure of a secondary node, refer to the schematic diagram of the structure of the communication apparatus shown in FIG. 15. Details are not described herein again.

An embodiment of this application further provides a computer-readable storage medium. The computer-readable storage medium stores instructions. When the instructions are run on a communication apparatus, a method process shown in FIG. 8 or FIG. 12 is implemented.

An embodiment of this application further provides a computer program product. When the computer program product runs on a communication apparatus, a method process shown in FIG. 8 or FIG. 12 is implemented.

A person of ordinary skill in the art may understand that all or a part of the processes of the methods in the foregoing embodiments may be implemented by a computer program instructing relevant hardware. The program may be stored in a computer-readable storage medium. When the program is executed, the processes of the methods in the foregoing embodiments are performed. The foregoing storage medium includes: any medium that can store program code, such as a ROM, a random access memory RAM, a magnetic disk, or an optical disc.

## Claims

1. A communication method, comprising:
Receiving (801), by an internet of things, IoT, domain master, a first broadcast message from a home network domain master, wherein the first broadcast message indicates a first communication resource;
Sending (802), by the IoT domain master, a first registration request to the home network domain master by using the first communication resource, wherein the first registration request requests to register with a domain in which the home network domain master is located;
Receiving (804), by the IoT domain master, a second broadcast message from the home network domain master, wherein the second broadcast message indicates a second communication resource; and
allocating, by the IoT domain master, the second communication resource to an IoT endpoint node and the IoT domain master or to the IoT endpoint node.

2. The method according to claim 1, wherein after the sending, by the IoT domain master, a first registration request to a home network domain master by using the first communication resource, the method further comprises:
Receiving (803), by the IoT domain master, a first acknowledgment instruction sent by the home network domain master, wherein the first acknowledgment instruction acknowledges the first registration request.

3. The method according to claim 1 or 2, wherein a domain identifier ID of the IoT domain master is the same as a domain ID of the home network domain master.

4. The method according to any one of claims 1 to 3, wherein the IoT domain master is a node within a resource management range of the home network domain master.

5. The method according to any one of claims 1 to 4, wherein the first communication resource comprises a first time domain resource or a first time-frequency resource; and the second communication resource comprises a second time domain resource or a second time-frequency resource.

6. The method according to any one of claims 1 to 5, wherein before the allocating, by the IoT domain master, the second communication resource to an IoT endpoint node and/or the IoT domain master, the method further comprises:
Receiving (806), by the IoT domain master, a second registration request sent by the IoT endpoint node, wherein the second registration request requests to register with a domain in which the IoT domain master is located; and
Sending (807), by the IoT domain master, a second acknowledgment instruction to the IoT endpoint node, wherein the second acknowledgment instruction acknowledges the second registration request.

7. An IoT domain master, wherein the IoT domain master comprises a processor (1501) and a memory (1502), the processor (1501) is coupled to the memory (1502), the memory (1502) is configured to store instructions, and the processor (1501) is configured to perform the following actions according to the instructions:
obtaining a first broadcast message from a home network domain master, wherein the first broadcast message indicates a first communication resource;
sending a first registration request to the home network domain master by using the first communication resource, wherein the first registration request requests to register with a domain in which the home network domain master is located;
obtaining a second broadcast message from the home network domain master, wherein the second broadcast message indicates a second communication resource; and
allocating the second communication resource to an IoT endpoint node and an IoT domain master or to the IoT endpoint node.

8. The IoT domain master according to claim 7, wherein the processor (1501) is further configured to obtain a first acknowledgment instruction sent by the home network domain master, wherein the first acknowledgment instruction acknowledges the first registration request.

9. The IoT domain master according to claim 7 or 8, wherein a domain identifier ID of the IoT domain master is the same as a domain ID of the home network domain master.

10. The IoT domain master according to any one of claims 7 to 9, wherein the IoT domain master is a node within a resource management range of the home network domain master.

11. The IoT domain master according to any one of claims 7 to 10, wherein the first communication resource comprises a first time domain resource or a first time-frequency resource; and the second communication resource comprises a second time domain resource or a second time-frequency resource.

12. The IoT domain master according to any one of claims 7 to 11, wherein the processor (1501) is further configured to obtain a second registration request sent by the IoT endpoint node, wherein the second registration request requests to register with a domain in which the IoT domain master is located; and the processor (1501) is further configured to send a second acknowledgment instruction to the IoT endpoint node, wherein the second acknowledgment instruction acknowledges the second registration request.

## Patentansprüche

1. Kommunikationsverfahren, umfassend:
Empfangen (801) einer ersten Broadcast-Nachricht von einem Heimnetzwerk-Domänen-Master durch einen Internet-of-Things-, IoT-, Domänen-Master, wobei die erste Broadcast-Nachricht eine erste Kommunikationsressource angibt;
Senden (802) einer ersten Registrierungsanforderung an den Heimnetzwerk-Domänen-Master durch den IoT-Domänen-Master unter Verwendung der ersten Kommunikationsressource, wobei die erste Registrierungsanforderung Registrieren bei einer Domäne beantragt, in der sich der Heimnetzwerk-Domänen-Master befindet;
Empfangen (804) einer zweiten Broadcast-Nachricht von dem Heimnetzwerk-Domänen-Master durch den IoT-Domänen-Master, wobei die zweite Broadcast-Nachricht eine zweite Kommunikationsressource angibt; und
Zuweisen der zweiten Kommunikationsressource durch den IoT-Domänen-Master an einen IoT-Endpunktknoten und den IoT-Domänen-Master oder an den IoT-Endpunktknoten.

2. Verfahren nach Anspruch 1, wobei das Verfahren, nachdem der IoT-Domänen-Master unter Verwendung der ersten Kommunikationsressource eine erste Registrierungsanforderung an einen Heimnetzwerk-Domänen-Master gesendet hat, ferner Folgendes umfasst:
Empfangen (803) einer ersten Bestätigungsanweisung durch den IoT-Domänen-Master, die durch den Heimnetzwerk-Domänen-Master gesendet wurde, wobei die erste Bestätigungsanweisung die erste Registrierungsanforderung bestätigt.

3. Verfahren nach Anspruch 1 oder 2, wobei ein Domänen-Bezeichner ID des IoT-Domänen-Masters mit einer Domänen-ID des Heimnetzwerk-Domänen-Masters übereinstimmt.

4. Verfahren nach einem der Ansprüche 1 bis 3, wobei der IoT-Domänen-Master ein Knoten innerhalb eines Ressourcenverwaltungsbereichs des Heimnetzwerk-Domänen-Masters ist.

5. Verfahren nach einem der Ansprüche 1 bis 4, wobei die erste Kommunikationsressource eine erste Zeitbereichsressource oder eine erste Zeit-Frequenz-Ressource umfasst; und die zweite Kommunikationsressource eine zweite Zeitbereichsressource oder eine zweite Zeit-Frequenz-Ressource umfasst.

6. Verfahren nach einem der Ansprüche 1 bis 5, wobei das Verfahren vor dem Zuweisen der zweiten Kommunikationsressource durch den IoT-Domänen-Master an einen IoT-Endpunktknoten und/oder den IoT-Domänen-Master ferner Folgendes umfasst:
Empfangen (806) einer zweiten Registrierungsanforderung, die durch den IoT-Endpunktknoten gesendet wurde, durch den IoT-Domänen-Master, wobei die zweite Registrierungsanforderung das Registrieren bei einer Domäne beantragt, in der sich der IoT-Domänen-Master befindet; und
Senden (807) einer zweiten Bestätigungsanweisung durch den IoT-Domänen-Master an den IoT-Endpunktknoten, wobei die zweite Bestätigungsanweisung die zweite Registrierungsanforderung bestätigt.

7. IoT-Domänen-Master, wobei der IoT-Domänen-Master einen Prozessor (1501) und einen Speicher (1502) umfasst, der Prozessor (1501) mit dem Speicher (1502) gekoppelt ist, der Speicher (1502) konfiguriert ist, um Anweisungen zu speichern, und der Prozessor (1501) konfiguriert ist, um die folgenden Aktionen gemäß den Anweisungen durchzuführen:
Erlangen einer ersten Broadcast-Nachricht von einem Heimnetzwerk-Domänen-Master, wobei die erste Broadcast-Nachricht eine erste Kommunikationsressource angibt;
Senden einer ersten Registrierungsanforderung an den Heimnetzwerk-Domänen-Master unter Verwendung der ersten Kommunikationsressource, wobei die erste Registrierungsanforderung das Registrieren bei einer Domäne beantragt, in der sich der Heimnetzwerk-Domänen-Master befindet; Erlangen einer zweiten Broadcast-Nachricht von dem Heimnetzwerk-Domänen-Master, wobei die zweite Broadcast-Nachricht eine zweite Kommunikationsressource angibt; und
Zuweisen der zweiten Kommunikationsressource an einen IoT-Endpunktknoten und einen IoT-Domänen-Master oder an den IoT-Endpunktknoten.

8. IoT-Domänen-Master nach Anspruch 7, wobei der Prozessor (1501) ferner konfiguriert ist, um eine durch den Heimnetzwerk-Domänen-Master gesendete erste Bestätigungsanweisung zu erlangen, wobei die erste Bestätigungsanweisung die erste Registrierungsanforderung bestätigt.

9. IoT-Domänen-Master nach Anspruch 7 oder 8, wobei ein Domänen-Bezeichner ID des IoT-Domänen-Masters mit einer Domänen-ID des Heimnetzwerk-Domänen-Masters übereinstimmt.

10. IoT-Domänen-Master nach einem der Ansprüche 7 bis 9, wobei der IoT-Domänen-Master ein Knoten innerhalb eines Ressourcenverwaltungsbereichs des Heimnetzwerk-Domänen-Masters ist.

11. IoT-Domänen-Master nach einem der Ansprüche 7 bis 10, wobei die erste Kommunikationsressource eine erste Zeitbereichsressource oder eine erste Zeit-Frequenz-Ressource umfasst; und die zweite Kommunikationsressource eine zweite Zeitbereichsressource oder eine zweite Zeit-Frequenz-Ressource umfasst.

12. IoT-Domänen-Master nach einem der Ansprüche 7 bis 11, wobei der Prozessor (1501) ferner konfiguriert ist, um eine durch den IoT-Endpunktknoten gesendete zweite Registrierungsanforderung zu erlangen, wobei die zweite Registrierungsanforderung das Registrieren bei einer Domäne anfordert, in der sich der IoT-Domänen-Master befindet; und der Prozessor (1501) ferner konfiguriert ist, um eine zweite Bestätigungsanweisung an den IoT-Endpunktknoten zu senden, wobei die zweite Bestätigungsanweisung die zweite Registrierungsanforderung bestätigt.

## Revendications

1. Procédé de communication, comprenant :
la réception (801), par un maître de domaine de l'Internet des objets, IoT, d'un premier message de diffusion provenant d'un maître de domaine du réseau domestique, dans lequel le premier message de diffusion indique une première ressource de communication ;
l'envoi (802), par le maître de domaine IoT, d'une première demande d'enregistrement au maître de domaine du réseau domestique en utilisant la première ressource de communication, dans lequel la première demande d'enregistrement demande l'enregistrement auprès d'un domaine dans lequel se trouve le maître de domaine du réseau domestique ;
la réception (804), par le maître de domaine IoT, d'un second message de diffusion provenant du maître de domaine du réseau domestique, dans lequel le second message de diffusion indique une seconde ressource de communication ; et
l'attribution, par le maître de domaine IoT, de la seconde ressource de communication à un nœud de point d'extrémité IoT et au maître de domaine IoT ou au nœud de point d'extrémité IoT.

2. Procédé selon la revendication 1, dans lequel, après l'envoi, par le maître de domaine IoT, d'une première demande d'enregistrement à un maître de domaine du réseau domestique à l'aide de la première ressource de communication, le procédé comprend en outre :
la réception (803), par le maître de domaine IoT, d'une première instruction d'acquittement envoyée par le maître de domaine du réseau domestique, dans lequel la première instruction d'acquittement accuse réception de la première demande d'enregistrement.

3. Procédé selon la revendication 1 ou 2, dans lequel un identifiant ID de domaine du maître de domaine IoT est le même qu'un ID de domaine du maître de domaine du réseau domestique.

4. Procédé selon l'une quelconque des revendications 1 à 3, dans lequel le maître de domaine IoT est un nœud situé dans une zone de gestion des ressources du maître de domaine du réseau domestique.

5. Procédé selon l'une quelconque des revendications 1 à 4, dans lequel la première ressource de communication comprend une première ressource de domaine temporel ou une première ressource temps-fréquence ; et la seconde ressource de communication comprend une seconde ressource de domaine temporel ou une seconde ressource temps-fréquence.

6. Procédé selon l'une quelconque des revendications 1 à 5, dans lequel, avant l'attribution, par le maître de domaine IoT, de la seconde ressource de communication à un nœud de point d'extrémité IoT et/ou au maître de domaine IoT, le procédé comprend en outre :
la réception (806), par le maître de domaine IoT, d'une seconde demande d'enregistrement envoyée par le nœud de point d'extrémité IoT, dans lequel la seconde demande d'enregistrement demande l'enregistrement auprès d'un domaine dans lequel se trouve le maître de domaine IoT ; et
l'envoi (807), par le maître de domaine IoT, d'une seconde instruction d'acquittement au nœud de point d'extrémité IoT, dans lequel la seconde instruction d'acquittement accuse réception de la seconde demande d'enregistrement.

7. Maître de domaine IoT, dans lequel le maître de domaine IoT comprend un processeur (1501) et une mémoire (1502), le processeur (1501) est couplé à la mémoire (1502), la mémoire (1502) est configurée pour stocker des instructions, et le processeur (1501) est configuré pour réaliser les actions suivantes conformément aux instructions :
l'obtention d'un premier message de diffusion provenant d'un maître de domaine du réseau domestique, dans lequel le premier message de diffusion indique une première ressource de communication ;
l'envoi d'une première demande d'enregistrement au maître de domaine du réseau domestique en utilisant la première ressource de communication, dans lequel la première demande d'enregistrement demande l'enregistrement auprès d'un domaine dans lequel se trouve le maître de domaine du réseau domestique ;
l'obtention d'un second message de diffusion provenant du maître de domaine du réseau domestique, dans lequel le second message de diffusion indique une seconde ressource de communication ; et
l'attribution de la seconde ressource de communication à un nœud de point d'extrémité IoT et à un maître de domaine IoT ou au nœud de point d'extrémité IoT.

8. Maître de domaine IoT selon la revendication 7, dans lequel le processeur (1501) est en outre configuré pour obtenir une première instruction d'acquittement envoyée par le maître de domaine du réseau domestique, dans lequel la première instruction d'acquittement accuse réception de la première demande d'enregistrement.

9. Maître de domaine IoT selon la revendication 7 ou 8, dans lequel un identifiant ID de domaine du maître de domaine IoT est le même qu'un ID de domaine du maître de domaine du réseau domestique.

10. Maître de domaine IoT selon l'une quelconque des revendications 7 à 9, dans lequel le maître de domaine IoT est un nœud situé dans une zone de gestion des ressources du maître de domaine du réseau domestique.

11. Maître de domaine IoT selon l'une quelconque des revendications 7 à 10, dans lequel la première ressource de communication comprend une première ressource de domaine temporel ou une première ressource temps-fréquence ; et la seconde ressource de communication comprend une seconde ressource de domaine temporel ou une seconde ressource temps-fréquence.

12. Maître de domaine IoT selon l'une quelconque des revendications 7 à 11, dans lequel le processeur (1501) est en outre configuré pour obtenir une seconde demande d'enregistrement envoyée par le nœud de point d'extrémité IoT, dans lequel la seconde demande d'enregistrement demande l'enregistrement auprès d'un domaine dans lequel se trouve le maître de domaine IoT ; et le processeur (1501) est en outre configuré pour envoyer une seconde instruction d'acquittement au nœud de point d'extrémité IoT, dans lequel la seconde instruction d'acquittement accuse réception de la seconde demande d'enregistrement.
